# EUROPEAN PATENT APPLICATION

(11) **EP 2 950 071 A1**
(43) Date of publication of application: **02.12.2015**
(21) Application number: 14382202.1
(22) Date of filing: 30.05.2014
(51) Int. Cl.: G01L 15/00, G01M 9/06

(54) **Aerodynamic pressure sensing system for an airfoil-shaped body**

(71) Applicant: Airbus Operations S.L., 28906 Getafe-Madrid (ES)
(72) Inventor: Maldonado Morello, Julian, 28906 GETAFE (Madrid) (ES); Díaz Parrilla, Jose, Maria, 28906 GETAFE (Madrid) (ES); Gómez Garciá, Javier, 28906 GETAFE (Madrid) (ES)
(74) Representative: Carpintero Lopez, Francisco

(57) **Abstract**

An aerodynamic pressure sensing system for an such as an airplane lifting surface, rotor blade etc. is disclosed wherein a plurality of pressure probes (7) are arranged on the upper and lower surfaces of the airfoil-shaped body (1) to sense aerodynamic pressure at discrete locations thereof, wherein the pressure sensitive elements (7) are arranged to form a plurality of rows (8) on said upper and lower surfaces. According to the invention between 55-75% of the total number of the pressure sensitive elements (7) are arranged at the leading edge section, and the remaining pressure sensitive elements are arranged at the intermediate section of the airfoil-shaped body. The invention allows measuring aerodynamic forces generated at the leading edge of the airfoil and particularly the suction peak more precisely and with a reduced number of pressure probes.

## Description

### Object of the invention

The present invention refers in general to a system for sensing or measuring aerodynamic loads created by an airfoil-shaped body such as an airplane lifting surface, rotor blade etc., while it is moved relative to a gaseous medium to generate an aerodynamic force.

An object of this invention, is to provide an aerodynamic pressure sensing distribution which allows to quickly and precisely determine the aerodynamic lift generated by an airfoil, in order to improve the efficiency of aerodynamic tests such us wind tunnel tests or even flight tests, improving thereby the airfoil design process in terms of time and quality.

### Background of the invention

Aircraft lifting surfaces such as aircraft wings, are designed to generate an aerodynamic lift to maintain the flight of the aircraft. Similarly, wind turbine blades are designed to provide an aerodynamic lift to turn the rotor and generate electric energy. Therefore, during the design of these airfoils to optimize the aerodynamic lift generated by a particular airfoil design, accurate determination of aerodynamic forces generated by an airfoil is essential.

Conventional aerodynamics test for measuring aerodynamic loads both in wind tunnel and flight tests, rely on arrays of pressure sensing elements, such as pressure taps, distributed and located on the upper and lower surfaces of the airfoil to be tested. By measuring the aerodynamic differential pressure between the upper and lower surfaces, the aerodynamic lift of the airfoil can be determined.

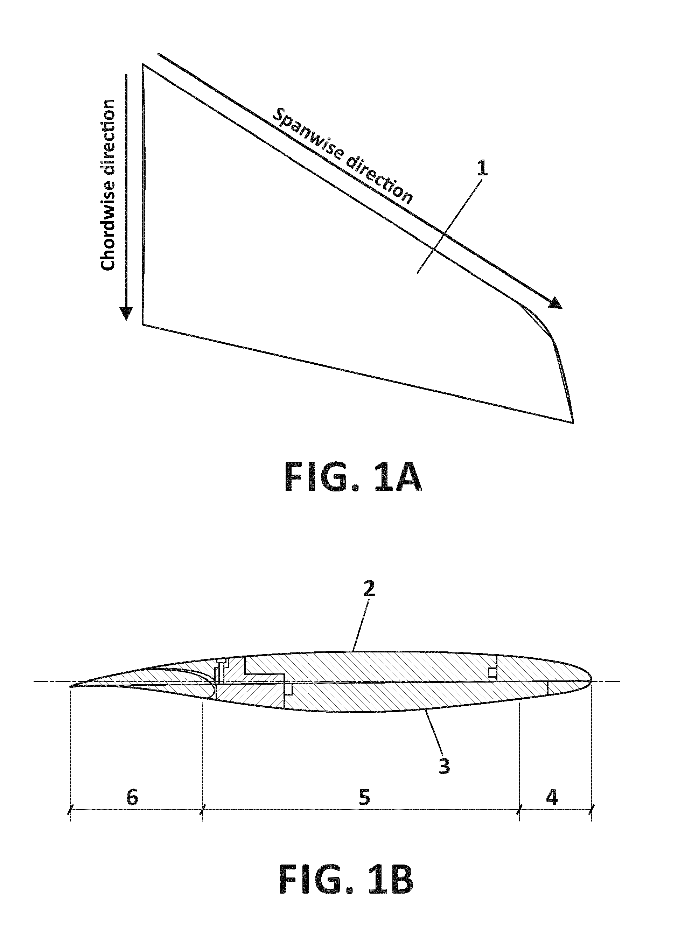

Figures 1A, 1B show an aircraft wing (1) having a leading edge section (4), a trailing edge section (6), and an intermediate section (5) between the leading and trailing edges. Traditionally, the arrangement of the pressure sensitive elements follows a predetermined pattern regardless of the particular airfoil design to be tested, that is, for the distribution of the pressure probes, the specific design of an airfoil to be tested is not taken into account.

As an aerodynamic definition, the leading edge is the part of an airfoil that first contacts the air, and from a structural point of view, the leading edge is the foremost edge of an airfoil profile. As an example of the distinction, during a tailslide, from an aerodynamic point-of-view, the trailing edge becomes the leading edge and vice-versa but from a structural point of view the leading edge remains unchanged.

The leading edge may be equipped with one or more of the following: leading edge boots, leading edge cuffs, leading edge extensions, leading edge slats, leading edge slots, krueger flaps, stall strips or vortex generators.

The trailing edge of an aerodynamic surface such as a wing is its rear edge, where the airflow separated by the leading edge rejoins. Control surfaces are attached at the leading edge to redirect the air flow and exert a controlling force by changing its momentum. Such control surfaces include ailerons at the wings for roll control, elevators at the tailplane for controlling pitch, and the rudder at the fin for controlling yaw.

Conventional methodologies for measuring aerodynamic loads, are based on arranging of the pressure probes according to a known pattern which makes easier to determine the location of each pressure probe, and thereby simplify the analysis of the information provided by the whole set of pressure probes. For that purpose, conventionally the pressure probes are grouped in rows on the upper and lower surfaces of the airfoil with the same direction of a chord line, and most of the pressure probes within the same row, are evenly distributed such as adjacent probes are equally spaced from each other to define a regular grid.

It could be said, that traditional techniques for measuring aerodynamic loads are mainly focused in simplifying the information processing, rather than in obtaining that measurement with high accuracy.

Therefore, the disadvantage of the current distribution of the pressure probes is that they are not capable of accurately measuring aerodynamic loads, specially the suction peak which is produced at the leading edge of the surface to be tested, hence no reliable information is obtained along the wingspan, and a real three-dimensional pressure distribution cannot be easily determined.

The suction peak is a main pressure coefficient (cp) gradient generated over the airfoil, which appears at the leading edge or front section of the airfoil.

To partially compensate this disadvantage, prior art techniques rely on a large number of pressure probes, which in turn requires more processing time and more time to install the probes on a model for a wing test or in a real aircraft.

### Summary of the invention

The present invention is defined in the attached independent claim and it provides an optimized selection of the locations where aerodynamic pressure is sensed on an airfoil, so that the generated aerodynamic forces and in particular the suction peak generated at the leading edge of the airfoil, are quickly and precisely determined.

Therefore, an aspect of the invention refers to an aerodynamic pressure sensing system for testing an airfoil-shaped body to determine the aerodynamic behavior of the same, wherein the system comprises a plurality of pressure sensitive elements arranged on the upper and lower surfaces of the airfoil-shaped body to sense aerodynamic pressure at discrete locations thereof.

Typically, the airfoil-shaped body comprises a leading edge section, a trailing edge section and an intermediate section extending between the leading and trailing edges, so that said sections define together an upper and a lower surface of the airfoil.

Like conventional systems, the pressure sensitive elements are arranged to form plurality of rows on said upper and lower surfaces, wherein said rows are parallel to a chord line of the airfoil-shaped body.

In the system of the present invention, between 55-75% of the total number of the pressure sensitive elements are arranged at the leading edge section, and the remaining pressure sensitive elements are arranged at the intermediate section, that is the trailing edge has no pressure sensitive elements. One of the effects associated with this feature, is that due to the high concentration or density of pressure sensitive elements at the leading edge, the suction peak generated at the leading edge can be measured or determined more precisely.

The invention provides an adaptive arrangement of the pressure sensors for each particular aerodynamic surface to be tested, such as this adaptive layout produces better results in terms of knowledge about the aerodynamic behavior of the surface and with a reduced number of pressure sensors compared with the prior art. The pressure sensors are distributed chord wise and span wise defining a tree-dimensional grid or mesh in order to capture with a better resolution aerodynamic specific phenomena, e.g. suction peaks.

Subsequently, the measured data is combined with previous in-house knowledge and mathematical functions to get pressure distribution of the airfoil. This measuring methodology has several advantages over the prior art:

Furthermore, the distance between any pair of consecutive pressure sensitive elements of the same row and located on the intermediate section, is different, and wherein the number of pressure sensitive elements located at the intermediate section of any pair of consecutive rows, is different.

In the present invention, the distribution pattern for the pressure sensitive elements is variable and it is adapted for each particular airfoil design to be tested. The configuration of a particular distribution pattern, is based partially on statistical analysis and historical information of the manufacturer.

An additional advantage of the invention, is that it has been concluded that a large number of pressure sensitive elements are not necessary if these elements are conveniently located at specific locations of a surface, where higher pressure variations are expected to appear. In the prior art approach many of the pressure sensors do not produce useful information.

The reduction of the number of pressure sensitive elements, will in turn reduce the signals processing time and errors probability after a model change, in the case of wind tunnel tests or handling during flight tests. One of the main reasons for sensor failure is the excessive number of pressure sensors mounted in the models and associated wiring, so that by reducing the number pressure sensors the probability of errors is also reduced.

The time needed to prepare a model for a wind tunnels test or a real aircraft for flight test, is also reduced since less number of pressure elements and associated wiring have to be installed, which will reduce the cost due to wind tunnel occupation time or reduce the time that the aircraft is on ground.

The reduction of the number of pressure sensitive elements will also generate more space within the model that can be used by other instrumentation devices or even remote control surface movement in the case of wind tunnel model.

Moreover, the variation in the distribution of the pressure sensitive elements, provides more flexibility to model designers in the case of wind tunnel models, since they will be able to design and manufacture the model with less space constrains improving quality and reducing lead times.

The invention can be applied to any lifting surface subject to pressure measurements, or any other geometry capable of generating an aerodynamic differential pressure.

The airfoil-shaped body may be part of an airplane wing, propeller blade, helicopter rotor, wind turbine blade, turbine blade, ship rudders, hydrofoils etc.

### Brief description of the drawings

Preferred embodiments of the invention, are henceforth described with reference to the accompanying drawings, in which:
Figure 1.- shows an example of an airfoil-shaped body, in this case an aircraft wing, wherein drawing A is a top plane view of the wing and drawing B is a cross-sectional view according to a chord-line.
Figure 2.- shows two perspective views of an aircraft wing wherein the locations of the pressure sensitive elements according to the invention are indicated by dots; drawing A shows the upper surface (2) of the wing and drawing B shows the lower surface (3).
Figure 3.- shows a top plan view of the aircraft wing of figure 2, which includes dots indicative of the location of pressure sensitive elements according to an embodiment of the invention. The figure also includes curved lines which separate areas on the wing surface wherein different aerodynamic pressures are generated. The area closer to the leading edge is where the aerodynamic pressure is higher, and this aerodynamic pressure progressively decrease from the leading edge to the trailing edge.
Figure 4.- shows two dimensionless coordinates graphs showing the distribution of the pressure sensitive elements on the upper surface (drawing A), and on the lower surface (drawing B) corresponding to the wing example of figures 2 and 3.

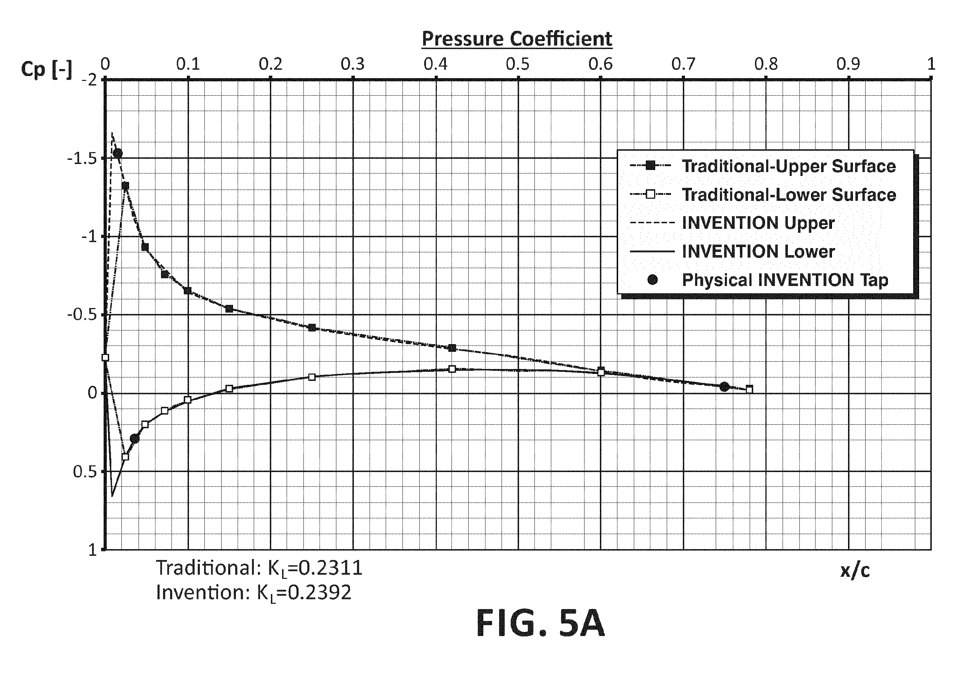

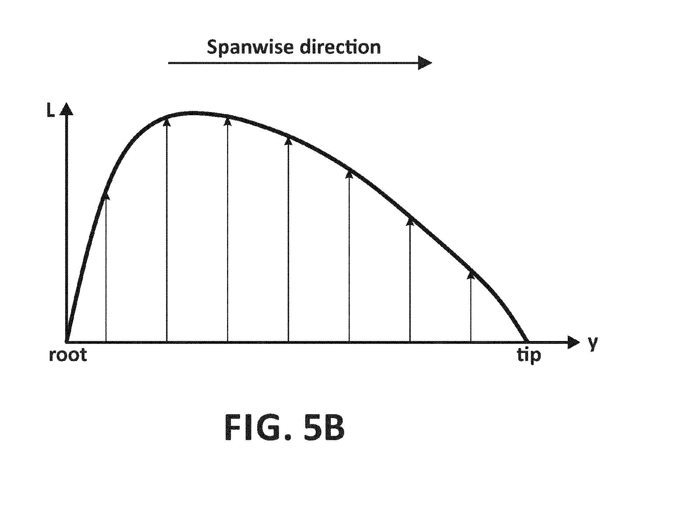

Figure 5.- drawing A is a graph showing a comparation between the pressure coefficient (Cp) measured with a traditional distribution of pressure probes, and the pressure coefficient measured with the pressure probes (tap) distribution according to the invention. Drawing A shows pressure distribution in the chordwise direction of the airfoil (upper and lower surfaces), wherein the suction peak generated at the leading edge both at the upper and lower surfaces, is clearly visible in this graph. Drawing B is a graph representing the spanwise distribution, that is, from root to tip, of the aerodynamic lift (L) generated by an airfoil profile.

### Preferred embodiment of the invention

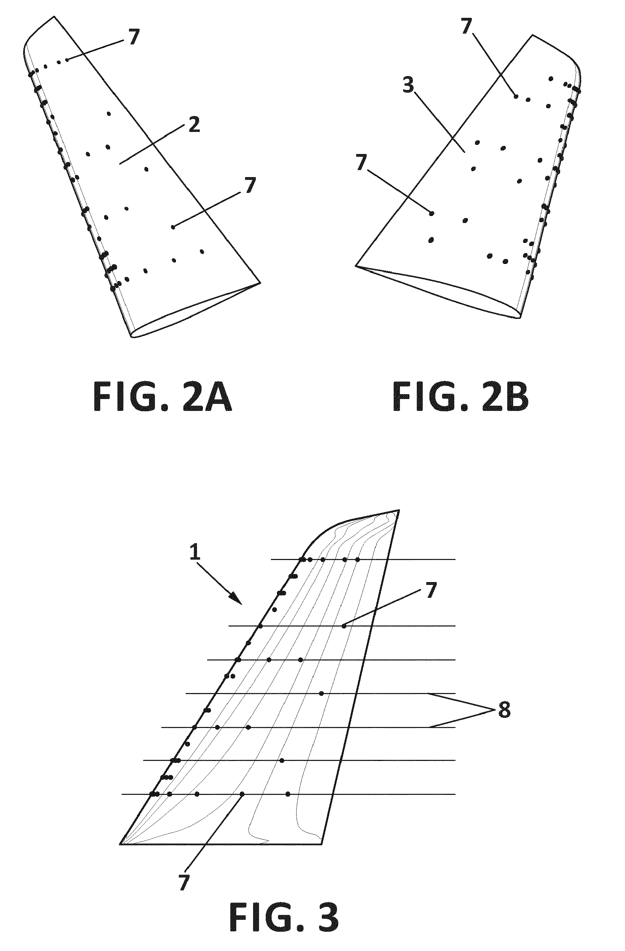

Figures 2 and 3 shows exemplary embodiments of aerodynamic pressure sensing system according to the invention, wherein a plurality of pressure sensitive elements (7) are installed on the upper and lower surfaces of an aircraft wing (1), to sense or capture aerodynamic pressure at discrete locations thereof, while the wing is being tested in a wind tunnel or during as flight test.

The pressure sensitive elements (7) are arranged to form a plurality of rows (8) on said upper and lower surfaces, which are parallel to each other and parallel a chord line of the wing.

Between 55-75% of the total number of the pressure sensitive elements (7) are arranged at the leading edge section (4) of the wing, and the remaining pressure sensitive elements are arranged at the intermediate section (5).

Furthermore, according to the invention the distance between any pair of consecutive pressure sensitive elements (7) of the same row (8) located on the intermediate section (5), is different. Additionally, the number of pressure sensitive elements located at the intermediate section of any pair of consecutive rows, is different.

Therefore, according to the invention the distance between adjacent pressure sensitive elements within the same row is variable, as well as the number of the pressure sensitive elements between the different rows. The invention allows a great flexibility in the location of the pressure sensitive elements, so that the distribution of these elements can be optimized for each particular airfoil design.

It can be observed in figures 2, 3 and 4, how the pressure sensitive elements are evenly distributed both on the upper and lower surfaces to obtain an accurate representation of the lift forces created by the surfaces. An aerodynamic load for a given airfoil shape, can be determined based on a differences of pressures between upper and lower surfaces.

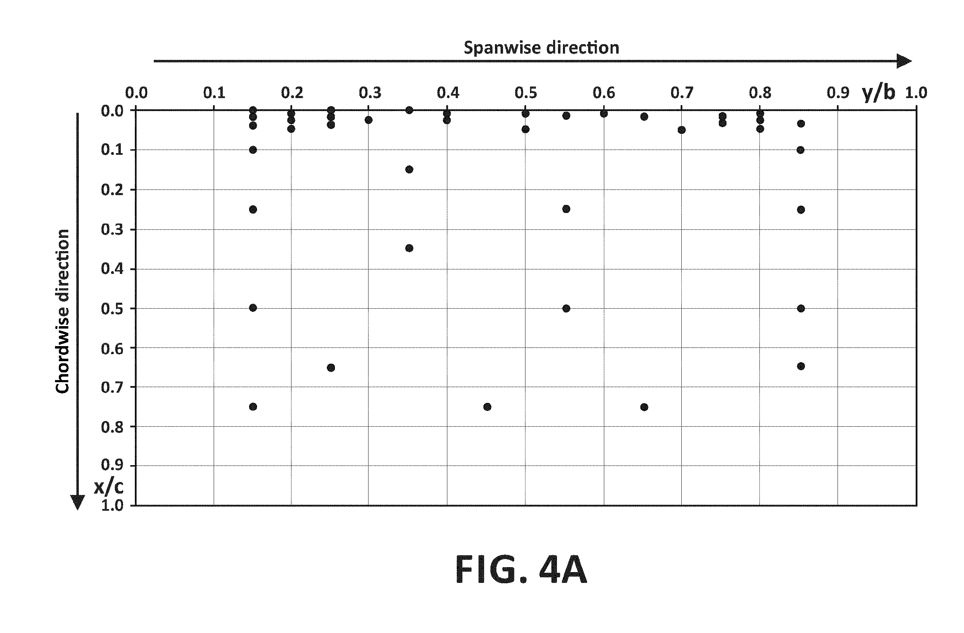

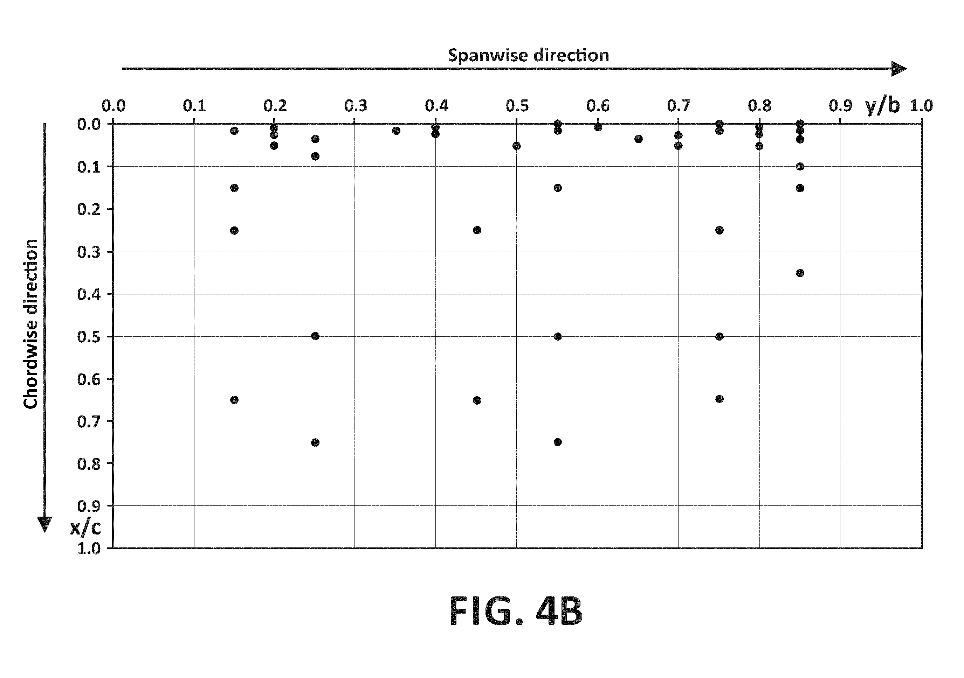

It can also be noted specially in figure 4, that there are the same number of rows (8) on the upper and lower surfaces, and the rows (8) of pressure sensitive elements of the upper and lower surfaces overlap, that is, the rows a grouped in pairs located following the same chord line, wherein one row is placed on the upper surface and the other row is placed on the lower surface. Preferably, the distance between any two adjacent rows is the same.

However, according to the invention in most of the overlapping pair of rows as defined previously, the location and number of the pressure sensitive elements within the rows on upper and lower surfaces, is different.

Also in view of figure 4 in combination with figure 5, it can noted that according to the invention the concentration or density of pressure sensitive elements is higher on those areas of the airfoil profile where higher pressure variations are expected to appear, that is, where the pressure gradient is higher. It can be noted in drawing 5 A that in both the upper and lower surfaces, the higher variation of the pressure coefficient (Cp) appears nearby the leading edge, that is when x/c is close to 0. Due to the arrangement of the pressure sensitive elements of the invention, those pressure variations are captured more precisely.

Furthermore, in the spanwise direction as shown in drawing 5 B, the areas where the pressure variations are higher, are the areas rear the ends of the airfoil, that is, the root and the tip areas, whereas in the intermediate area, the lift forces (L) are much higher but the variation of the same is lower. According to the invention, the number of pressure sensitive elements is also higher at the root and the tip areas on upper and lower surfaces, and with respect to the intermediate area.

The present invention can be applied to any lifting surface, but, preferably, the airfoil-shaped body is a part of: an airplane wing, propeller blade, helicopter rotor, wind turbine blade, turbine blade.

The pressure sensitive element could be any device available in the market suitable to sense pressure for this particular application, such as a pressure tabs consisting in tubes that can measure the pressure over the surface, or sensor based on MEMS technology. Additionally, these pressure sensitive elements are capable of generating in a known manner an electric signal representative of the variations of aerodynamic load or pressure at the particular location of that pressure sensitive element. These signals are received at a computerized device, and they are processed in a known manner to determine the aerodynamic lift of the airfoil which is being tested.

Other preferred embodiments of the present invention are described in the appended dependent claims and the multiple combinations of those claims.

## Claims

1. Aerodynamic pressure sensing system for an airfoil-shaped body, comprising:
an airfoil-shaped body having a leading edge section a trailing edge section and an intermediate section extending between the leading and trailing edges, such as these sections define together an upper and a lower surface of the airfoil-shaped body,
a plurality of pressure sensitive elements arranged on the upper and lower surfaces of the airfoil-shaped body to sense aerodynamic pressure at discrete locations thereof,
wherein the pressure sensitive elements are arranged to form a plurality of rows on said upper and lower surfaces, wherein the pressure sensitive elements within the same row are aligned in the direction of a chord line of the airfoil-shaped body,
**characterised in that** between 55-75% of the total number of the pressure sensitive elements are arranged at the leading edge section, and the remaining pressure sensitive elements are arranged at the intermediate section.

2. System according to claim 1 wherein on the upper surface, the row closer to the root and the row closer of the tip of the airfoil-shaped body, have more pressure sensitive elements than any other row located between those two rows.

3. System according to claim 1 or 2 wherein the distance between any pair of consecutive pressure sensitive elements within the same row and located on the intermediate section, is different,

4. System according to any of the preceding claims wherein the number of pressure sensitive elements located at the intermediate section of any pair of adjacent rows, is different.

5. System according to any of the preceding claims wherein at least one row includes only one pressure sensitive element located at the intermediate section.

6. System according to claim any of the preceding claims wherein all the pressure sensitive elements of at least one row, are grouped at the leading edge section or at the intermediate section.

7. System according to any of the preceding claims wherein each pressure sensitive element is capable of generating a signal representative of the pressure at the particular location of that element.

8. System according to any of the preceding claims wherein the airfoil-shaped body is a part of: an airplane lifting surface, propeller blade, helicopter rotor, wind turbine blade, turbine blade.
